# EUROPÄISCHE PATENTANMELDUNG

(11) **EP 4 242 052 A1**
(43) Veröffentlichungstag der Anmeldung: **13.09.2023**
(21) Anmeldenummer: 23160202.0
(22) Anmeldetag: 06.03.2023
(51) Int. Cl.: B60L 58/22, B60L 58/16, B60L 15/20

(54) **VERFAHREN ZUM BETREIBEN EINES ANTRIEBSSYSTEMS MIT MEHREREN ENERGIESPEICHERN**

(30) Priorität: 10.03.2022 DE 102022202410
(71) Anmelder: Siemens Mobility GmbH, 81739 München (DE)
(72) Erfinder: Ruppert, Swen, 91096 Möhrendorf (DE)
(74) Vertreter: Siemens Patent Attorneys

(57) **Zusammenfassung**

Die Erfindung betrifft ein Verfahren zum Betreiben eines Antriebssystems, bei dem das Antriebssystem mindestens zwei Antriebsteilsysteme umfasst, und jedes Antriebsteilsystem über ein Energiespeicherteilsystem (BAT 1, BAT 2) verfügt. Bei hoher Leistungsabgabe (VOLL) des Antriebssystems ist jedes der mindestens zwei Antriebsteilsysteme am Antrieb beteiligt. In mindestens einem Zeitabschnitt geringerer Leistungsabgabe (TEIL) des Antriebssystems wird mindestens eines der mindestens zwei Antriebsteilsysteme zumindest zeitweise abgeschaltet, so dass die Energiespeicherteilsysteme (BAT 1, BAT 2) der mindestens zwei Antriebsteilsysteme einen minimalen Energieinhalt (E-min) gleichzeitig erreichen. Weiterhin betrifft die Erfindung hierzu korrespondierend ein Antriebssystem, eine Vorrichtung oder ein System zur Datenverarbeitung, ein Computerprogramm, einen computerlesbaren Datenträger, sowie ein Datenträgersignal.

## Beschreibung

Die Erfindung betrifft ein Verfahren zum Betreiben eines Antriebssystems, vorzugsweise eines Antriebssystems eines Schienenfahrzeugs.

Schienenfahrzeuge werden überwiegend mit elektrischer Energie aus der Oberleitung versorgt. Da dies für manche Strecken nicht möglich ist, kann hier ein Dieselantrieb zum Einsatz kommen. Dies ist jedoch aufgrund der Schadstoff- und Partikelemission unerwünscht, so dass stattdessen Traktionsbatterien zum Einsatz kommen. Hybride Fahrzeug-Traktionssysteme z.B. für Bahnen ermöglichen die Nutzung elektrischer Energie aus der Oberleitung oder alternativ aus einer Traktionsbatterie.

Bei derartigen Antriebssystemen, welche elekrische Energie aus Energiespeichern beziehen, ist es wichtig, diese so zu betreiben, dass die Energiespeicher möglichst effizient genutzt werden. Bei Fahrzeugen bedeutet dies üblicherweise, dass eine möglichst lange Zeit oder eine möglichst lange Strecke ohne Aufladen der Energiespeicher gefahren werden kann. Insbesondere soll dies möglich sein, ohne allzu groß dimensionierte Energiespeicher vorsehen zu müssen, welche teuer und schwer sind. Wenn ein Antriebssystem aus einer Mehrzahl von Antriebsteilsystemen besteht, welche jeweils über ein eigenes Energiespeicherteilsystem verfügen, erlaubt dieser Aufbau verschiedene Möglichkeiten des Zusammenwirkens der Antriebsteilsysteme, um das genannte Ziel der effizienten Nutzung der Energiespeicher zu erreichen.

Der Erfindung liegt die Aufgabe zugrunde, ein Verfahren zum Betreiben eines Antriebssystems aufzuzeigen, wobei das Antriebssystem eine Mehrzahl von Antriebsteilsystemen umfasst, und jedes Antriebsteilsystem über ein Energiespeicherteilsystem verfügt.

Diese Aufgabe wird durch ein Verfahren mit den Merkmalen des Anspruchs 1 gelöst. Ferner sind Gegenstand der Erfindung ein entsprechendes Antriebssystem, eine entsprechende Vorrichtung oder ein System zur Datenverarbeitung, ein entsprechendes Computerprogramm, ein entsprechender computerlesbarer Datenträger, und ein entsprechendes Datenträgersignal. Vorteilhafte Ausgestaltungen und Weiterbildungen sind Gegenstand von Unteransprüchen.

Das erfindungsgemäße Verfahren dient dem Betreiben eines Antriebssystems, wobei das Antriebssystem mindestens zwei Antriebsteilsysteme umfasst, und jedes Antriebsteilsystem über ein Energiespeicherteilsystem verfügt. Bei hoher Leistungsabgabe des Antriebssystems ist jedes der mindestens zwei Antriebsteilsysteme am Antrieb beteiligt. In mindestens einem Zeitabschnitt geringerer Leistungsabgabe des Antriebssystems erfolgt eine Teilabschaltung, indem mindestens eines der mindestens zwei Antriebsteilsysteme zumindest zeitweise abgeschaltet wird, und zwar derart, dass die Energiespeicherteilsysteme der mindestens zwei Antriebsteilsysteme einen minimalen Energieinhalt gleichzeitig erreichen.

Das Antriebssystem weist zwei oder mehr Antriebsteilsysteme auf. Da jedes dieser Antriebsteilsysteme von einem eigenen Energiespeicherteilsystem versorgt wird, sind zwei oder mehr Energiespeicherteilsysteme für den Antrieb zuständig. Jeder Energiespeicher kann elektrische Energie zur Verfügung stellen, wodurch er entladen wird, und ist auch wieder aufladbar. Durch den Antrieb mit mehreren Energiespeicherteilsystemen entsteht die Möglichkeit, dass der Energieinhalt der mehreren Energiespeicherteilsysteme unterschiedlich voneinander ist, insbesondere kann diese Unsymmetrie im Laufe des Betreibens des Antriebssystems entstehen und ausgeprägter werden. Bei diesem Energieinhalt kann es sich um den absoluten Energieinhalt handeln, also die Menge an bis zum Erreichen des minimalen Energieinhalts abgebbarer Energie, oder um den relativen Energieinhalt, also die Menge an bis zum Erreichen des minimalen Energieinhalts abgebbarer Energie bezogen auf den maximalen Energieinhalt des jeweiligen Energiespeicherteilsystems. Hierbei muss der maximale Energieinhalt nicht das Gleiche sein wie die absolut nutzbare Energie, sondern kann vielmehr individuell definiert sein, kann also z.B. in Hinblick auf die Lebensdauer oder andere Kriterien einer vorteilhaft zu nutzenden maximalen Energie entsprechen. Beispielsweise kann es sein, dass ein neuer Energiespeicher zwar mehr Energie tragen kann, aber zur Schonung nicht die volle Energie genutzt werden soll.

Das Vorgehen unterscheidet sich in zwei unterschiedlichen Lastsituationen: bei hoher Leistungsabgabe sind alle Antriebsteilsysteme am Antrieb beteiligt, wobei diese Beteiligung vorzugsweise gleich groß ist. Bei hoher Leistungsabgabe des Antriebssystems geben alle Antriebsteilsysteme ihre maximale Leistung ab, oder eine Leistung in der Nähe des Maximums der Leistungsabgabe; somit ist die Leistungsabgabe des gesamten Antriebssystems in solchen Phasen maximal oder in der Nähe des maximalen. Ein Zeitabschnitt geringerer Leistungsabgabe hingegen ist eine Phase, in welcher die Leistungsabgabe des gesamten Antriebssystems deutlich von dem Maximum entfernt ist, im Folgenden auch als Teillastphase bezeichnet.

In einer Teillastphase erfolgt eine Teilabschaltung. Dies bedeutet, dass zumindest eines der Antriebsteilsysteme nicht am Antrieb beteiligt ist, also in Bezug auf den Antrieb abgeschaltet ist. Teilabschaltung bedeutet also, dass mindestens ein Antriebsteilsystem abgeschaltet ist, aber auch mindestens ein Antriebsteilsystem antreibt. Die Teilabschaltung kann in einer, mehreren, oder allen Teillastphasen erfolgen.

Die Teilabschaltung erfolgt gezielt so, dass eine Angleichung des Energieinhalts stattfindet. Diese Angleichung betrifft jedoch nicht den aktuellen Zeitpunkt, sondern den Zeitpunkt des Erreichens des minimalen Energieinhalts. Dieser minimale Energieinhalt kann verschieden festgelegt werden. Z.B. kann der minimale Energieinhalt derjenige sein, wenn die Energiespeicher als leer anzusehen sind. Alternativ kann der minimale Energieinhalt einem bestimmen Anteil des maximalen Energieinhalts entsprechen, beispielsweise 10 %, oder auch einer bestimmten Menge an von dem Energiespeicher noch abgebbarer Energie. Den minimalen Energieinhalt nicht als den Zustand des leeren Energiespeichers vorzusehen, ist deswegen vorteilhaft, weil ein Antriebssystem üblicherweise nicht betrieben wird, bis die Energiespeicher leer sind, sondern zuvor ein Aufladen der Energiespeicher erfolgt.

Die Teilabschaltung bewirkt das gleichzeitige Erreichen des minimalen Energieeinhalts. Hierbei versteht sich, dass exakte Gleichzeitigkeit selten bis unmöglich auftritt, so dass diese als einen Toleranzbereich umfassend zu verstehen ist.

Die Bedingung der Gleichzeitigkeit zusammen mit einer geeigneten Festlegung des minimalen Energieinhalts - z.B. in Form eines Mindestpuffers, welcher beim nächsten Aufladevorgang noch in den Energiespeichern vorhanden sein sollte - bewirkt, dass das Antriebssystem möglichst lange betrieben werden kann, ohne dass ein Antriebsteilsystem aufgrund eines leeren Energiespeichers ausfällt. Dies entspricht einerseits einer effizienten Nutzung der Energiespeicher, und andererseits ist ein sicherer Betrieb des Antriebssystems gewährleistet.

In Weiterbildung der Erfindung wird in einem Zeitabschnitt geringerer Leistungsabgabe ein Antriebsteilsystem während dem gesamten Zeitabschnitt abgeschaltet, oder es kann auch während nur eines Teils des Zeitabschnitts abgeschaltet werden, oder innerhalb des Zeitabschnitts erfolgt ein Wechsel des abgeschalteten Antriebsteilsystems. Es sind also verschiedene Arten der Teilabschaltung möglich. Diese Arten sind auf eines oder mehrere Antriebsteilsysteme anwendbar: z.B. kann in einer Teillastphase ein erstes Antriebsteilsystem vollständig abgeschaltet sein, während ein zweites Antriebsteilsystem während der ersten Hälfte und ein drittes Antriebsteilsystem während der zweiten Hälfte der gleichen Teillastphase abgeschaltet wird. Für verschiedene Teillastphasen können verschiedene Arten der Teilabschaltung durchgeführt werden, wobei es auch möglich ist, dass in einer oder mehreren Teillastphasen keine Teilabschaltung erfolgt, hier also alle Antriebsteilsysteme zum Antrieb beitragen.

Vorteilhaft ist es, wenn zu Beginn eines Zeitabschnitts geringerer Leistungsabgabe das Antriebsteilsystem, dessen Energiespeicherteilsystem den kleinsten Energieinhalt aufweist, abgeschaltet wird. Zusätzlich kann auch das Antriebsteilsystem mit dem zweit-, dritt-, usw. niedrigsten Energieeinhalt abgeschaltet werden. Die Orientierung an dem kleinsten Energieinhalt ermöglicht eine besonders einfache Entscheidung über das oder die abzuschaltenden Antriebsteilsysteme. Ein ebenso einfach umzusetzendes Kriterium ist es, das Antriebsteilsystem, dessen Energiespeicherteilsystem den größten Energieinhalt aufweist, nicht abzuschalten. Zusätzlich kann auch das Antriebsteilsystem mit dem zweit-, dritt-, usw. höchsten Energieeinhalt nicht abgeschaltet werden.

Einer Weiterbildung der Erfindung gemäß wird im Voraus unter Verwendung von Informationen über einen erforderlichen Leistungsbedarf und über einen aktuellen Energieinhalt der Energiespeicherteilsysteme bestimmt, welches der mindestens zwei Antriebsteilsysteme abzuschalten ist bzw. welche der mindestens zwei Antriebsteilsysteme abzuschalten sind. Diese Entscheidung bezieht sich vorzugsweise auf alle Teillastphasen bis zum erneuten Aufladen der Energiespeicher an einer Ladestation, d.h. für alle Teillastphasen wird vor Beginn des Betriebs entschieden, ob, welches oder welche Antriebsteilsysteme abgeschaltet werden.

Dient das Antriebssystem dem Antrieb eines Fahrzeugs, so kann es sich bei den Informationen über einen erforderlichen Leistungsbedarf um Streckeninformationen betreffend eine von einem mit dem Antriebssystem ausgestatteten Fahrzeug zu fahrende Strecke handeln. D.h. nach dem Aufladen der Energiespeicherteilsysteme und vor dem Beginn des Befahrens der Strecke kann bestimmt werden, welche Teilabschaltung in welchen Teillastphasen durchgeführt werden soll. Sind mehr als zwei Antriebsteilsysteme vorhanden, so kann eine Bestimmung einer Anzahl von gleichzeitig abzuschaltenden Antriebsteilsystemen erfolgen. Kommt das Antriebssystem zu einer anderen Anwendung als für ein Fahrzeug, so kann anstelle von Streckeninformationen ein Lastprofil verwendet werden.

Vorteilhaft ist es, wenn bei der Bestimmung berücksichtigt wird, dass hieraus eine Verbesserung des Gesamtwirkungsgrades des Antriebssystems resultieren soll. Es kann also bei der Entscheidung über die Art der durchzuführenden Teilabschaltung eine Bedingung verwendet werden, wonach eine, mehrere oder alle Teilabschaltungen nur derart durchgeführt werden dürfen, dass der Gesamtwirkungsgrad durch die jeweilige Teilabschaltung keine Verschlechterung erfährt.

Einer Ausgestaltung der Erfindung nach ist bei hoher Leistungsabgabe des Antriebssystems jedes der mindestens zwei Antriebsteilsysteme mit gleicher Leistungsabgabe am Antrieb beteiligt, und die Energiespeicherteilsysteme der mindestens zwei Antriebsteilsysteme geben eine voneinander unterschiedliche Leistung an weitere Verbraucher ab. Hieraus resultiert eine Ungleichheit hinsichtlich der Energieinhalte der verschiedenen Energiespeicherteilsysteme, welche nicht durch die Anforderung des Antriebs zustande kommt, sondern durch andere Verbraucher als das angetriebene System.

Es ist möglich, dass eine Abschaltung unter der Bedingung erfolgt, dass hieraus eine Verbesserung des Gesamtwirkungsgrades des Antriebssystems resultiert. In diesem Fall hat die Teilabschaltung nicht nur die Angleichung der Energieeinhalte zum Ziel, sondern auch eine Energieeinsparung. Alternativ kann eine Abschaltung auch dann erfolgen, wenn hieraus eine Verschlechterung des Gesamtwirkungsgrades des Antriebssystems resultiert. In diesem Fall ist die Angleichung der Energieinhalte das dominierende Ziel, dem die Energieeinsparung untergeordnet wird, indem eine Wirkungsgradverschlechterung in Kauf genommen wird.

Nach den bisherigen Ausführungen wird mindestens ein Zeitabschnitt geringerer Leistungsabgabe genutzt, um das gleichzeitige Erreichen des minimalen Energieinhalts zu bewirken. Alternativ oder zusätzlich ist es möglich, hierfür mindestens einen Zeitabschnitt geringerer Leistungsaufnahme des Antriebssystems zu verwenden, bei einem Fahrzeug also ein Teillastbremsen.

Die Erfindung betrifft auch ein Antriebssystem für ein Schienenfahrzeug. Dieses verfügt über Mittel, das beschriebene Verfahren durchzuführen, vorzugsweise auch hinsichtlich der abhängigen Ansprüche.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Hierzu kommt eines oder mehrere miteinander zusammenwirkende Computerprogramme zum Einsatz. Werden mehrere Programme verwendet, so können diese gemeinsam auf einem Computer gespeichert und von diesem ausgeführt werden, oder auch auf verschiedenen Computern an verschiedenen Orten. Da dies funktional gleichbedeutend ist, wird vorliegend im Singular "das Computergrogramm" und "der Computer" formuliert.

Im Folgenden wird die Erfindung anhand eines Ausführungsbeispiels näher erläutert. Dabei zeigen:
Figur 1: ein Antriebssystem für ein Fahrzeug,
Figur 2: eine erste Grafik zur Veranschaulichung des Abschaltens eines von zwei Antriebsteilsystemen im Teillastbetrieb,
Figur 3: eine zweite Grafik zur Veranschaulichung des Abschaltens eines von zwei Antriebsteilsystemen im Teillastbetrieb,
Figur 4: eine Grafik zur Veranschaulichung des Abschaltens mehrerer Antriebsteilsysteme im Teillastbetrieb,
Figur 5: eine Grafik zum Vergleich des Abschaltens eines von zwei Antriebsteilsystemen im Teillastbetrieb mit dem Fall des Nichtabschaltens,
Figur 6: eine Grafik zur Veranschaulichung des nur zeitweisen Abschaltens eines von zwei Antriebsteilsystemen im Teillastbetrieb,
Figur 7: eine Grafik zur Veranschaulichung des Abschaltens eines oder mehrerer Antriebsteilsysteme im Teillastbetrieb.

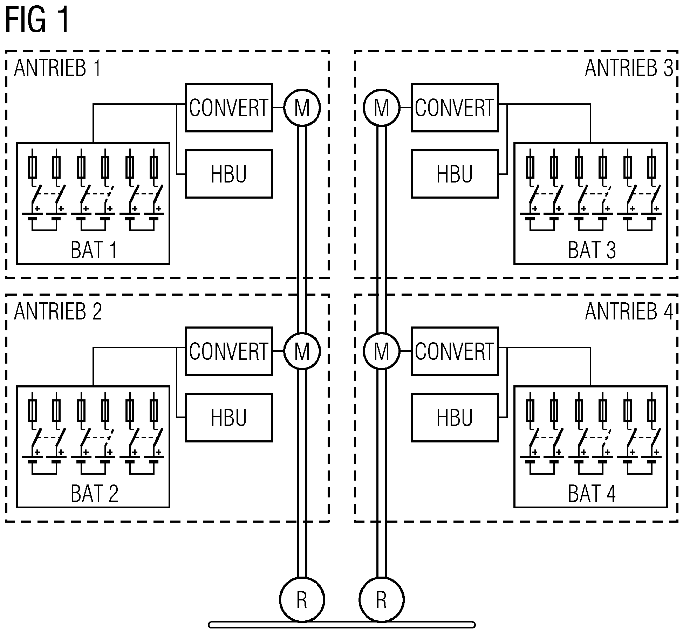

Figur 1 zeigt schematisch ein Antriebssystem für ein Fahrzeug, insbesondere das eines Schienenfahrzeugs. Während im Folgenden die Erfindung anhand des Antriebs eines solchen Schienenfahrzeugs erläutert wird, ist sie nicht hierauf beschränkt; sie eignet sich auch für andere Anwendungsgebiete, wie z.B. die Traktion von Förderbändern in Industrieanlagen.

Einige Schienenfahrzeuge, z.B. Bahnen, verfügen über ein hybrides Fahrzeug-Traktionssystem. Dies bedeutet, dass das Schienenfahrzeug einerseits über Strom von der Oberleitung mit elektrischer Energie versorgt werden kann, und andererseits von Traktionsbatterien. Die Verwendung von batterieangetriebenen Zügen ist vorteilhaft, da sie Dieselfahrzeuge ersetzen können, welche ansonsten auf nicht elektrifizierten Strecken zum Einsatz kommen. Hierdurch wird der unerwünschte Schadstoffausstoß von Dieselfahrzeugen vermieden. Die elektrische Traktion mittels Batterie weist ähnliche Eigenschaften wie die Dieseltraktion auf, nämlich eine hohe Zugkraft bei eher geringer Leistung. Dies entspricht der Möglichkeit einer hohen Beschleunigung und dem Fahren mit nicht allzu hoher konstanter Geschwindigkeit nach Abschluss der Beschleunigung. Diese Anforderung wird an viele Regionalzüge gestellt, welche entlegene nicht elektrifizierte Strecken befahren, auf welchen keine hohen Geschwindigkeiten möglich sind.

Das Antriebssystem der Figur 1 zeigt den Teil, welcher zur Traktion mittels im Fahrzeug befindlicher Energiespeicher gehört. Es weist die vier Antriebsteilsysteme ANTRIEB 1, ANTRIEB 2, ANTRIEB 3 und ANTRIEB 4 auf. Jedes Antriebsteilsystem ANTRIEB 1, ANTRIEB 2, ANTRIEB 3 und ANTRIEB 4 wird durch ein Energiespeicherteilsystem BAT 1, BAT 2, BAT 3, BAT 4 gespeist. Vorzugsweise sind die Energiespeicherteilsysteme BAT 1, BAT 2, BAT 3 und BAT 4 identisch aufgebaut; dieser gleiche Aufbau hinsichtlich der Energiespeicher-Branches muss aber nicht unbedingt der Fall sein. Die Energiespeicherteilsysteme BAT 1, BAT 2, BAT 3 und BAT 4 umfassen elektrische Energiespeicher. Bei diesen handelt es sich vorzugsweise um Akkumulatoren, also aufladbare Batterien, die Energie in elektrochemischer Form speichern.

Jedes Energiespeicherteilsystem BAT 1, BAT 2, BAT 3 und BAT 4 ist über einen Energiewandler CONVERT mit einem Motor M verbunden. Bei den Energiewandlern CONVERT handelt es sich um Stromrichter, die den Motoren M elektrischen Strom geeigneter Frequenz und Amplitude zur Verfügung stellen. Ferner werden von jedem Energiespeicherteilsystem BAT 1, BAT 2, BAT 3 und BAT 4 Zusatzverbraucher HBU versorgt. Bei diesen Zusatzverbrauchern HBU kann es sich z.B. um Beleuchtungseinrichtungen, Klima/Heizungs-Anlagen, elektronische Systeme, Anlagen zur Kühlung von Komponenten, oder Komfortverbraucher wie Steckdosen handeln. Die Anzahl und/oder Art der Zusatzverbraucher HBU, sowie ihr Energiebedarf kann sich von Antriebsteilsystem zu Antriebsteilsystem unterscheiden. Auch ist es möglich, dass eines oder mehrere der Antriebsteilsysteme ANTRIEB 1, ANTRIEB 2, ANTRIEB 3 und ANTRIEB 4 zumindest zweitweise keine Zusatzverbraucher HBU versorgen müssen. Wie viel elektrische Energie außer für die Traktion bereitgestellt werden muss, kann also für jedes der Energiespeicherteilsysteme BAT 1, BAT 2, BAT 3 und BAT 4 unterschiedlich sein.

In der Figur 1 sind jeweils zwei der Antriebsteilsysteme ANTRIEB 1, ANTRIEB 2, ANTRIEB 3 und ANTRIEB 4 zum gemeinsamen Antrieb eines Rades R vorgesehen. Dies ist nur beispielhaft, es ist alternativ z.B. auch möglich, dass pro Rad eine andere Zahl von Antriebsteilsystemen vorgesehen ist, oder dass jedes der Antriebsteilsysteme ANTRIEB 1, ANTRIEB 2, ANTRIEB 3 und ANTRIEB 4 ein eigenes Rad R antreibt. Die beiden in der Figur dargestellten Räder R können ferner mechanisch miteinander gekoppelt sein; sie können Bestandteil des gleichen oder unterschiedlicher Wägen des Schienenfahrzeugs sein.

Die Energieinhalte der einzelnen Energiespeicherteilsysteme BAT 1, BAT 2, BAT 3 und BAT 4 können über die Zeit auseinanderlaufen. Für den Betrieb des Schienenfahrzeugs ist dieser Energieinhalt von maßgeblicher Bedeutung. Denn er entscheidet darüber, ob das Fahrzeug sein Ziel überhaupt erreichen kann, und auch, in welcher Fahrzeit dieses Ziel erreichbar ist. Ferner ist der Energieinhalt der Energiespeicherteilsysteme BAT 1, BAT 2, BAT 3 und BAT 4 auch für die Aufladezeit von Relevanz. Züge haben üblicherweise eine begrenzte Aufenthaltszeit in einem Bahnhof, wo die Aufladung der Energiespeicherteilsysteme BAT 1, BAT 2, BAT 3 und BAT 4 erfolgt.

Für dieses Auseinanderlaufen der Energieinhalte der verschiedenen Energiespeicherteilsysteme BAT 1, BAT 2, BAT 3 und BAT 4 gibt es zwei Ursachen:
Einerseits kann eine unterschiedliche Alterung der Komponenten der verschiedenen Energiespeicherteilsysteme vorliegen. Dies resultiert in unterschiedlich großen Kapazitäten und somit unterschiedlichen nutzbaren Energieinhalten der elektrischen Energiespeicher.
Andererseits kann eine Unsymmetrie in der Energieabnahme ursächlich sein. Dies wiederum kann hervorgerufen sein z.B. durch unterschiedliche Belastung der Antriebe (Load Shift). Ferner wird dies dadurch hervorgerufen, dass die Energiespeicherteilsysteme BAT 1, BAT 2, BAT 3 und BAT 4 unterschiedlich durch Zusatzverbraucher HBU beansprucht werden.

Im Folgenden wird beschrieben, wie die Energieinhalte der verschiedenen Energiespeicherteilsysteme BAT 1, BAT 2, BAT 3 und BAT 4 untereinander symmetriert werden können. Unter Symmetrierung wird vorliegend verstanden, dass die für die Fahrzeugtraktion verwendbaren Energiespeicherteilsysteme BAT 1, BAT 2, BAT 3 und BAT 4 ihren minimalen Energieinhalt annähernd gleichzeitig erreichen. Ziel dieser Symmetrierung ist es, dass das Fahrzeug möglichst lange fahren kann, ohne dass eines der Energiespeicherteilsysteme BAT 1, BAT 2, BAT 3 und BAT 4 keine elektrische Energie mehr zur Verfügung stellen kann, da sein minimaler Energiezustand erreicht ist. Dies würde zwar grundsätzlich noch ein Antrieb des Fahrzeugs ermöglichen, da nicht alle Energiespeicherteilsysteme BAT 1, BAT 2, BAT 3 und BAT 4 ihren verfügbaren Energieinhalt ausgeschöpft haben. Allerdings bringt dies bei elektrisch angetriebenen Fahrzeugen das Risiko der Unmöglichkeit der Zielerreichung oder zumindest einer verspäteten Zielerreichung bzw. einer Nichteinhaltung einer Fahrzeit mit sich. Denn ist zumindest ein Energiespeicherteilsystem bis auf einen minimalen Energieinhalt entladen, kann dieses keine Energie mehr abgeben und hieraus resultierend das gesamte Antriebssystem nicht mehr die volle Performance erreichen.

Ferner wirkt sich die angestrebte Symmetrierung auch positiv auf den Aufladevorgang der Energiespeicherteilsysteme BAT 1, BAT 2, BAT 3 und BAT 4 aus. Denn üblicherweise werden unterschiedliche Energiespeicherteilsysteme mit gleicher Ladeleistung aufgeladen, auch wenn sie untereinander unsymmetrisch entladen sind. Sie werden meist per Schnellladung an der Auslegungsgrenze der Ladeeinrichtung aufgeladen. Dies liegt darin begründet, dass bei Schienenfahrzeugen nur eine eingeschränkte Aufladezeit zur Verfügung steht, welche es maximal auszunutzen gilt. Durch die damit verbundene hinsichtlich der Aufladeleistung gleichmäßige Aufladung ist das weniger tief entladene Energiespeicherteilsystem schneller mit der Aufladung fertig und die Aufladung des tiefer entladenen Energiespeicherteilsystems verlängert die Gesamtaufladezeit. Entstehen die Unsymmetrien der Energiespeicherteilsysteme nicht durch unterschiedliche Alterung, sondern nur durch unterschiedlichen Verbrauch, wird bei erfolgter Symmetrierung auch eine symmetrische Aufladung erreicht und damit ein gleichzeitiges Ladeende.

Die Maßnahme zur Erreichung der angestrebten Symmetrierung ist es, die Antriebsteilsysteme unterschiedlich stark für den Antrieb des Fahrzeugs zu belasten, um bestimmte Energiespeicherteilsysteme stärker zu entladen als andere, und damit den Ladezustand anzugleichen. Hier ist zu unterscheiden zwischen Fahren unter Teillast und unter Volllast. Volllast entspricht einer hohen bis maximalen Leistungsabgabe eines Energiespeicherteilsystems. Volllastfahren findet bei Beschleunigung des Fahrzeugs statt, z.B. beim Losfahren aus dem Stillstand, oder bei einer Erhöhung der Geschwindigkeit nach Freigabe auf eine höhere Geschwindigkeit. Eine Teillastfahrt hingegen ist z.B. eine Fahrt mit annähernd konstanter Geschwindigkeit. In Bezug auf ein Energiespeicherteilsystem bedeutete eine Teillastphase eine niedrige oder mittlere Leistungsabgabe, jedenfalls deutlich unter der maximalen Leistungsabgabe.

Zunächst erfolgt eine Überlegung zum Wirkungsgrad des Antriebssystems. Dieser wird bestimmt durch die Verluste, welche einerseits an der Quelle, also den Energiespeicherteilsystemen, entstehen, und andererseits durch die Verluste der Verbraucher, also der Motoren.

Für die Energiespeicher gilt, dass die Verluste aufgrund des Batterieinnenwiderstands annähernd quadratisch mit der abgegebenen Leistung ansteigen. Betrachtet man also zwei Energiespeicher, welche in Summe eine bestimmte Leistung abgeben, hierbei jedoch unterschiedlich stark belastet werden, so fällt bei dem stärker belasteten Energiespeicher aufgrund der quadratisch ansteigenden Verluste relativ zur abgegebenen Leistung deutlich mehr Verlustleistung an. Dies führt zu einer insgesamt höheren Verlustleistung als bei symmetrischer Belastung der beiden Energiespeicher zur Abgabe der bestimmten Leistung. Diese Verschlechterung des Wirkungsgrades ist bei Teillastbetrieb aufgrund der quadratischen Abhängigkeit weniger stark als bei Volllast.

Die beschriebene Verschlechterung des Energiespeicher-Wirkungsgrades durch Teilabschaltung gilt jedenfalls, wenn keine Zusatzverbraucher mit stark unterschiedlichen Verbräuchen an die beiden Energiespeicher angeschlossen sind. Ist dies hingegen der Fall, könnte durch Abschalten des Antriebsteilsystems, welches einen wesentlich größeren Zusatzverbrauch hat, die von den unterschiedlichen Energiespeicherteilsystemen abzugebende Leistung nivelliert werden. Hierdurch ergäbe sich dann sogar eine Verkleinerung der gesamten Energiespeicherverluste gegenüber dem Fall ohne Teilabschaltung.

Zur Illustration dessen ein Zahlenbeispiel:
Die von einem ersten Energiespeicher abzugebende Leistung für Zusatzverbraucher sei P_HBU1 = 5kW, und die von einem zweiten Energiespeicher abzugebende Leistung für Zusatzverbraucher sei P_HBU2 = 1kW. Der Ladezustand des ersten Energiespeichers ist wegen höherem Zusatzverbraucher-Verbrauch i.d.R. kleiner, dieses Antriebsteilsystem wird also abgeschaltet. Damit ergibt sich, wenn im Teillastbetrieb insgesamt eine Traktionsleistung von P_Traktion = 6kW abzugeben ist: die Leistungsabgabe durch den ersten Energiespeicher ist P_ES1=5kW, und die Leistungsabgabe durch den zweiten Energiespeicher ist P_ES2=1kW+6kW=7kW. Ohne Teilabschaltung hingegen wäre die Leistungsabgabe durch den ersten Energiespeicher P_ES1=5kW+3kW=8kW, und die Leistungsabgabe durch den zweiten Energiespeicher P_ES2=1kW+3kW=4kW. Damit sind die Energiespeicher Gesamtverluste bei Teilabschaltung sogar kleiner, da die Leistungen P_ES1 und P_ES2 gleichmäßiger sind.

Für die Motoren und zugehörigen Energiewandler gilt, dass sich deren Wirkungsgrad aus Leerlaufverlusten und verbrauchsabhängigen Verlusten ergibt. Werden zwei Motoren zum Antrieb verwendet, so ergibt sich der Gesamtverlust aus zwei Leerlaufverlusten und den beiden verbrauchsabhängigen Verlusten. Wenn einer der beiden Antriebsmotoren ausgeschaltet wird und dessen Leistungsabgabe durch den anderen Motor übernommen wird, entfällt der Leerlaufverlust des ausgeschalteten Motors. Außerdem kann der aktive Motor an einem Arbeitspunkt mit höherem Wirkungsgrad betrieben werden. Letzteres gilt insbesondere im Teillastbetrieb.

Betrachtet man also das Abschalten eines Antriebsteilsystems im Teillastbetrieb, so verschlechtert sich - schlimmstenfalls, s. obige Ausführungen - der Gesamtwirkungsgrad der Energiespeicherteilsysteme. Im Teillastbetrieb ist diese Verschlechterung aber weniger ausgeprägt als die Verbesserung des Gesamtwirkungsgrades der Motoren und zugehörigen Energiewandler. Daher ist im Teillastbetrieb das Abschalten eines Antriebsteilsystems hinsichtlich des Wirkungsgrades des gesamten Antriebssystems von Vorteil. Dies kann genutzt werden, um im Teillastbetrieb die angestrebte Symmetrierung der Energieinhalte der Energiespeicherteilsysteme zu bewirken, wie im Folgenden geschildert wird.

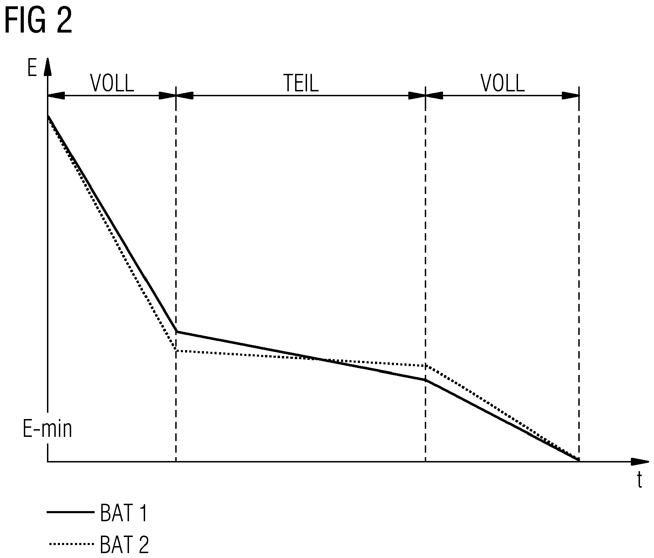

Figur 2 zeigt eine erste Grafik zur Veranschaulichung des Abschaltens eines von zwei Antriebsteilsystemen im Teillastbetrieb. Hierbei ist auf der Ordinate der Energieinhalt E der Energiespeicherteilsysteme aufgetragen, die Abszisse ist der Verlauf der Zeit t. Der Energieinhalt ist hierbei der im jeweiligen Energiespeicherteilsystem nutzbare relative Energieinhalt. Hat also ein Energiespeicherteilsystem z.B. aufgrund von Alterungseffekten eine reduzierte Kapazität, so ist dessen absolut nutzbarer Energieinhalt kleiner als bei einem Energiespeicherteilsystem mit weniger Alterung. Der relative Energieinhalt ist in der Figur im Vergleich zu den anderen dennoch von 100% (= voll) bis E-min (= leer) auf der Ordinate aufgezeichnet. Diese unterschiedliche Kapazität wirkt sich dementsprechend auf die in den Figuren gezeigten negativen Steigungen aus: bei kleinerer Kapazität ist bei gleichem Verbrauch die Steigung des Graphen steiler nach unten. Der Wert von E-min muss nicht dem Leerzustand entsprechen. Vorzugsweise ist vielmehr ein Puffer bis zum vollständig entladenen Zustand vorgesehen, so dass E-min beispielsweise 15% relativer Energieinhalt sein kann.

Zunächst erfolgt ein Fahren unter Volllast VOLL. Hierbei sinkt der Energieinhalt E der Energiespeicherteilsysteme stark ab. Beide Energiespeicherteilsysteme geben bei Volllast die gleiche Leistung für die Fahrzeugtraktion ab. Dennoch sinkt der Energieinhalt E des Energiespeicherteilsystems BAT 2 stärker als derjenige des Energiespeicherteilsystems BAT 1. Dies liegt z.B. daran, dass das stärker belastete Energiespeicherteilsystem BAT 2 mehr Leistung an Zusatzverbraucher HBU abgeben muss als das weniger stark belastete Energiespeicherteilsystem BAT 1. Eine andere Ursache für das stärkere Absinken des Energieinhalts E des Energiespeicherteilsystems BAT 2 kann auch eine unterschiedliche Kapazität des Energiespeichers sein, welche wiederum von vornherein unterschiedlich gewählt werden oder sich aufgrund von Alterungseffekten im Laufe der Zeit ergeben kann.

Im Anschluss findet eine Fahrt unter Teillast TEIL statt. Hierbei wird das Antriebsteilsystem mit dem Energiespeicherteilsystem BAT 2 in Bezug auf die Fahrzeugtraktion ausgeschaltet. D.h. der Motor dieses Antriebsteilsystems wird abgeschaltet, und das Energiespeicherteilsystem BAT 2 muss nur noch die jeweiligen Zusatzverbraucher HBU mit Energie versorgen. Der Energiebedarf der Zusatzverbraucher HBU ist auch der Grund dafür, dass der Energieinhalt E des Energiespeicherteilsystems BAT 2 des abgeschalteten Antriebsteilsystems bei Fahrt unter Teillast TEIL nicht konstant bleibt, sondern leicht abnimmt. Die der Antrieb des Fahrzeugs allein durch das Antriebsteilsystem mit dem Energiespeicherteilsystem BAT 1 erfolgt, sinkt dessen Energieinhalt E stärker ab als derjenige des Energiespeicherteilsystems BAT 2. Am Ende der Teillastphase TEIL ist der Energieinhalt E des Energiespeicherteilsystems BAT 2 höher als derjenige des Energiespeicherteilsystems BAT 1.

Schließlich erfolgt erneut ein Fahren unter Volllast VOLL. Hier gelten die gleichen Grundsätze wie oben bei der ersten Volllastphase erläutert. Am Ende dieses Abschnittes ist die angestrebte Symmetrierung erreicht, d.h. beide Energiespeicherteilsysteme BAT 1 und BAT 2 erreichen zum gleichen Zeitpunkt ihren minimalen Energieinhalt E-min.

Anhand von Figur 2 wird ersichtlich, dass ein gezieltes Abschalten von Antriebsteilsystemen in einer Teillastphase dazu genutzt werden kann, das Energiespeicherteilsystem des aktiven Antriebsteilsystems zu entladen, während das Energiespeicherteilsystem am deaktivierten Antriebsteilsystem seinen Ladezustand bis auf gegebenenfalls vorhandene Verbräuche durch die Hilfsbetriebe halten kann.

Figur 2 ist eine stark vereinfachte Darstellung einer Fahrt bis zum Erreichen des minimalen Energieinhalt E-min; üblicherweise findet eine bei weitem höhere Anzahl von sich abwechselnden Phasen von Teillast und Volllast statt. Überdies sind oftmals auch mehr als nur zwei Antriebsteilsysteme vorhanden, über deren Abschaltung entschieden werden kann. Auch für eine höhere Anzahl von Antriebsteilsystemen und eine Mehrzahl von Teillastphasen gilt, dass durch geschickte Wahl der aktiven Antriebsteilsysteme während der Teillastphasen die Energiespeicherteilsysteme mit höherem Energieinhalt bis zum leeren Zustand so nivelliert werden können, dass am Ende der gesamten Entladung nahezu alle Energiespeicherteilsysteme die gleiche Spannung haben und damit die höchste Energiemenge aus dem Gesamtenergiespeicher genutzt werden kann. Dies wird im Folgenden weiter erläutert.

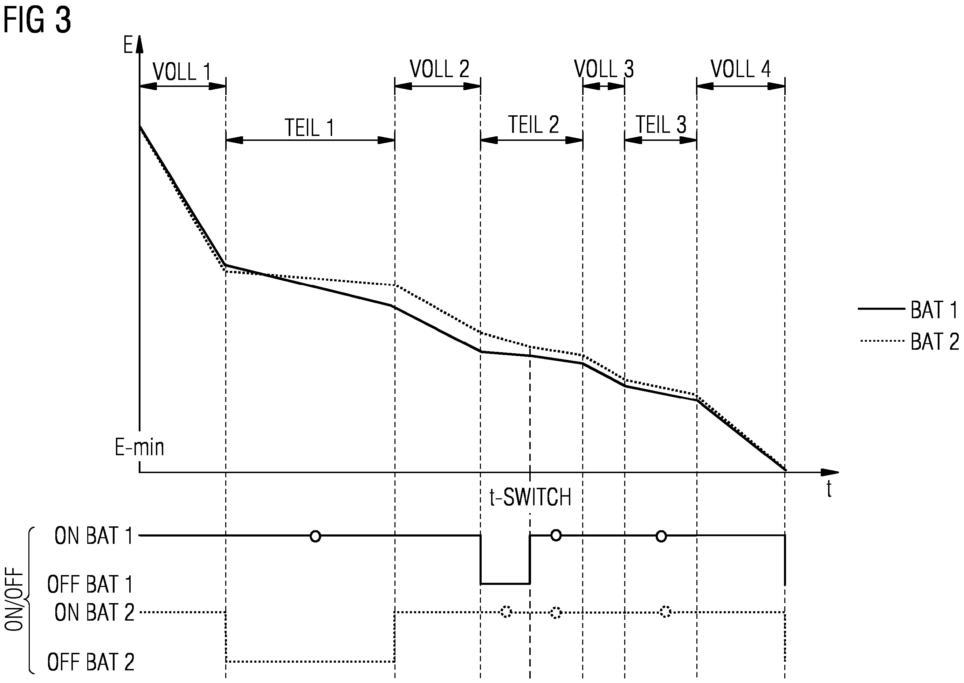

Zur Erläuterung von möglichen Vorgehensweisen, wenn sich mehrere Zyklen von Vollast- und Teillastphasen abwechseln, zeigt die Figur 3 eine zweite Grafik zur Veranschaulichung des Abschaltens von einem von zwei Antriebsteilsystemen im Teillastbetrieb. Unter dem Verlauf des Energieinhalts E über der Zeit t ist die Aktivität ON/OFF der Energiespeicherteilsysteme BAT 1 und BAT 2 hinsichtlich ihrer Beteiligung an der Fahrzeugtraktion aufgetragen. Hierbei zeigt ON BAT 1 an, dass das Antriebsteilsystem des Energiespeicherteilsystems BAT 1 am Fahrzeugantrieb beteiligt ist, während OFF BAT 1 anzeigt, dass dies nicht der Fall ist. Entsprechendes gilt für die Werte ON BAT 2 und OFF BAT 2 des Antriebsteilsystems des Energiespeicherteilsystems BAT 2. Durch einen Punkt auf diesen Verläufen ist deutlich gemacht, dass das jeweilige Antriebsteilsystem in einer Teillastphase am Fahrzeugantrieb beteiligt ist.

Die erste Volllastphase VOLL1 und die erste Teillastphase TEIL1 entsprechen dem zu Figur 2 erläuterten. Hierauf folgt eine zweite Volllastphase VOLL2 und eine zweite Teillastphase TEIL2. In dieser zweiten Teillastphase TEIL2 erfolgt die Abschaltung zunächst umgekehrt wie in der ersten Teillastphase TEIL1, d.h. das Antriebsteilsystem des Energiespeicherteilsystems BAT 1 wird ausgeschaltet, während das Antriebsteilsystem des Energiespeicherteilsystems BAT 2 den Fahrzeugantrieb allein übernimmt. Ein Abschalten eines Antriebsteilsystems während einer Teillastphase kann sich über die gesamte Teillastphase erstrecken, wie dies in der ersten Teillastphase TEIL1 gezeigt ist. Alternativ ist es möglich, wie in der zweiten Teillastphase TEIL2 gezeigt, einen Wechsel der Abschaltung innerhalb einer Teillastphase vorzunehmen. Zum durch die dicke gepunktete Linie angezeigten Zeitpunkt t-SWITCH erfolgt ein Umschalten derart, dass nun keines der Antriebsteilsysteme abgeschaltet ist, das Antriebsteilsystem des Energiespeicherteilsystems BAT 1 wird also angeschaltet und trägt nun auch zur Fahrzeugtraktion bei.

Hierauf folgt eine weitere Volllastphase VOLL3, und eine Teillastphase TEIL3, in welcher keine Abschaltung eines Antriebsteilsystems stattfindet. Die Fahrt endet mit einer Volllastphase VOLL4, zu deren Ende beide Energiespeicherteilsysteme BAT 1 und BAT 2 gleichzeitig ihren minimalen Energieinhalt E-min erreichen.

In Ergänzung zu dem in Figur 2 dargestellten Grundprinzip zeigt Figur 3 also, dass bei mehreren Teillastphasen die Aktivität der Antriebsteilsysteme von Teillastphase zu Teillastphase unterschiedlich gewählt werden kann. Außerdem kann innerhalb einer Teillastphase die Aktivität der Antriebsteilsysteme wechseln, gezeigt bei der der Teillastphase TEIL2. Ferner ist es möglich, dass beide Teilsysteme aktiv sind. gezeigt bei der der Teillastphase TEIL3, es muss also nicht in jeder Teillastphase eine Abschaltung erfolgen.

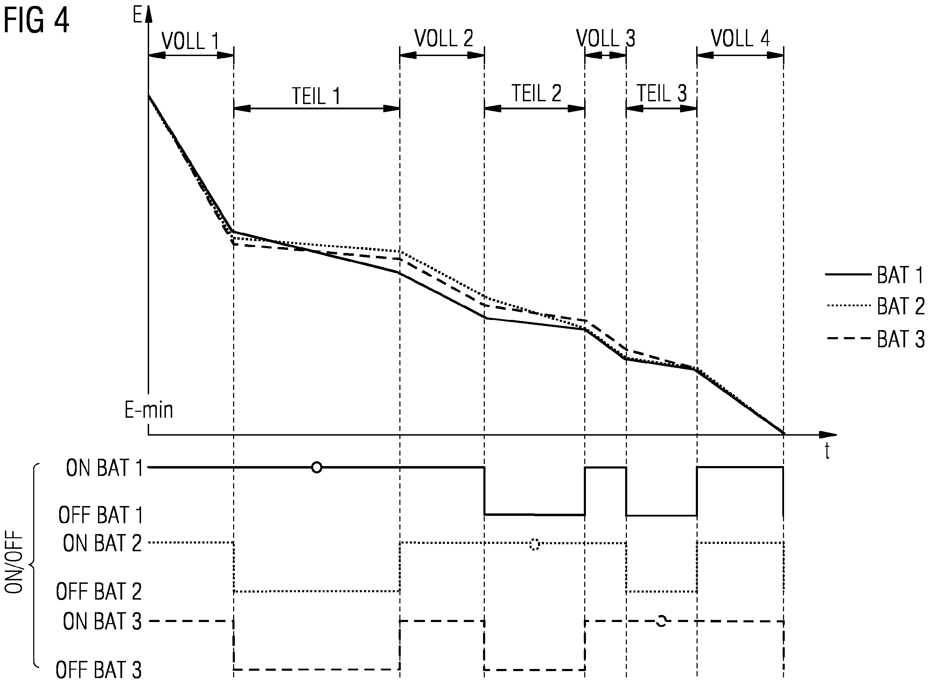

Die beschriebene Vorgehensweise ist nicht beschränkt auf ein Antriebssystem mit nur zwei Antriebsteilsystemen, von welchen in Teillastphasen eines abgeschaltet werden kann. Hierzu zeigt Figur 4 eine Möglichkeit der Abschaltung von Antriebsteilsystemen im Teillastbetrieb, wenn drei Antriebsteilsysteme bei der Fahrzeugtraktion beteiligt sind. Hier ist zu sehen, dass in der ersten Teillastphase TEIL1 die Antriebsteilsysteme der Energiespeicherteilsysteme BAT 2 und BAT 3 abgeschaltet sind, während in der zweiten Teillastphase TEIL2 die Antriebsteilsysteme der Energiespeicherteilsysteme BAT 1 und BAT 3 abgeschaltet sind, und in der dritten Teillastphase TEIL3 die Antriebsteilsysteme der Energiespeicherteilsysteme BAT 1 und BAT 2.

Hierbei zeigt die Figur 4 den Fall, dass grundsätzlich nur eines der mehreren Antriebsteilsysteme in einer Teillastphase aktiv ist. Eine solche Vorgehensweise ist sinnvoll und möglich, und kann - wie in der Figur gezeigt - auch zur angestrebten Symmetrierung führen. Die Auswahl des die Fahrzeugtraktion in den Teillastphasen bewirkenden Antriebsteilsystems erfolgt hierbei vorzugsweise derart, dass immer das Antriebsteilsystem, dessen Energiespeicherteilsystem aktuell den höchsten Energieinhalt bis zum Erreichen des leeren Zustands hat, während einer Teillastphase im aktiven Zustand betrieben wird.

Im Allgemeinen gilt jedoch: sind mehr als zwei Antriebsteilsysteme vorhanden, kann zwischen diesen eine Auswahl bezüglich der Abschaltung in Teillastphasen getroffen werden. D.h. in jeder Teillastphase ist zumindest eines der Antriebsteilsysteme aktiv, während eine Abschaltung von keinem, einem oder mehreren Antriebsteilsystemen möglich ist.

Bislang wurde der Fall geschildert, dass aufgrund unterschiedlich starker Beanspruchung der Antriebsteilsysteme in Volllastphasen ein unterschiedlicher Energieinhalt der Energiespeicherteilsysteme entsteht, welcher durch Abschaltung von Antriebsteilsystemen in Teillastphasen ausgeglichen werden kann. Wie oben erläutert, kann durch eine Teilabschaltung, d.h. ein Abschalten mancher der Antriebsteilsysteme in Teillastphasen, eine Wirkungsgradverbesserung erzielt werden. Hierdurch motiviert ist eine solche Teilabschaltung auch unabhängig von einer bestehenden Unsymmetrie der Energieinhalte der Energiespeicherteilsysteme sinnvoll. Denn durch eine solche Teilabschaltung kann die Reichweite des gesamten Energiespeichersystems aufgrund der besseren Speicherausnutzung durch Reduzierung der Verluste erhöht werden. Entsteht durch eine solche Wirkungsgrad-motivierte Teillastphasenabschaltung erst oder erneut eine Unsymmetrie der Energieinhalte, kann das erläuterte Verfahren zur Symmetrierung durchgeführt werden.

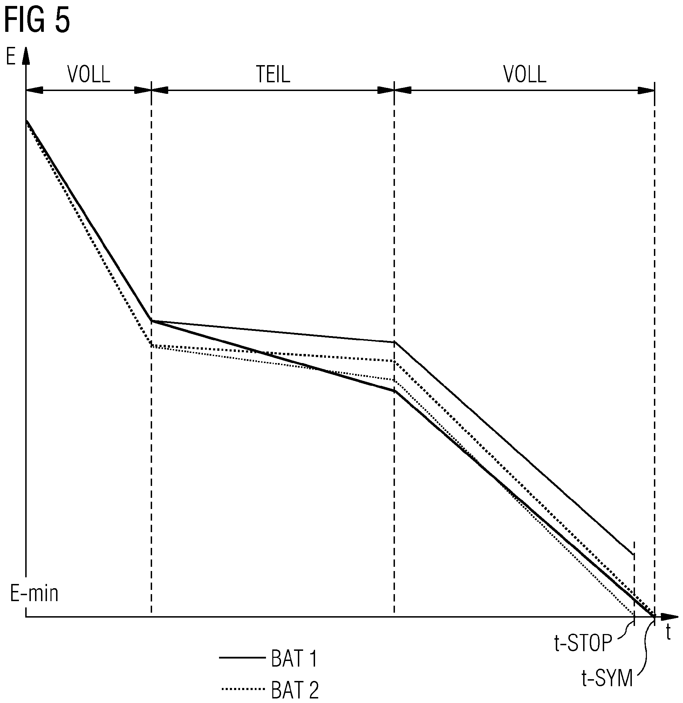

Eine Abschaltung von Antriebsteilsystemen kann jedoch auch dann sinnvoll sein, wenn hierdurch keine Wirkungsgradverbesserung erzielt wird. Eine Verschlechterung des Gesamtwirkungsgrades kann z.B. auftreten, wenn ein Antriebsteilsystem aufgrund der Abschaltung eines anderen Antriebsteilsystems annähernd oder ganz in Volllast gerät. Die Teilabschaltung kann auch in diesem hinsichtlich des Gesamtwirkungsgrades negativen Fall vorteilhaft sein, wenn der aufgezeigte Effekt der Symmetrierung bewirkt wird, wie anhand von Figur 5 erläutert wird. Diese stellt eine Grafik zum Vergleich des Abschaltens von einem von zwei Antriebsteilsystemen im Teillastbetrieb mit dem Fall des Nichtabschaltens dar. Hierbei zeigen die dicken Linien den Verlauf des Energieinhalts der beiden Energiespeicherteilsysteme BAT 1 und BAT 2, wenn wie in Figur 2 gezeigt vorgegangen wird, d.h. das stärker belastete Antriebsteilsystem mit dem Energiespeicherteilsystem BAT 2 wird in der Teillastphase TEIL abgeschaltet. In diesem Fall erreichen beide Energiespeicherteilsysteme BAT 1 und BAT 2 zum Zeitpunkt t-SYM den minimalen Energieinhalt E-min. Die dünner gezeichneten Linien zeigen den Verlauf der Energieeinhalte, wenn - motiviert dadurch, dass keine Wirkungsgradverbesserung durch Teilabschaltung erzielbar ist - in der Teillastphase TEIL beide Antriebsteilsysteme an der Fahrzeugtraktion beteiligt sind. Dies führt dazu, dass das stärker belastete Antriebsteilsystem mit dem Energiespeicherteilsystem BAT 2 in der anschließenden Volllastphase VOLL zum Zeitpunkt t-STOP den minimalen Energieinhalt E-min des Energiespeicherteilsystems BAT 2 erreicht und somit ausfällt. Ab diesem Zeitpunkt t-STOP ist kein oder nur noch ein stark eingeschränkter Betrieb des Fahrzeugs möglich. Da der Zeitpunkt t-SYM nach dem Zeitpunkt t-STOP liegt, ist trotz verschlechtertem Wirkungsgrad bei Teilabschaltung diese Abschaltung aus Gründen der erhöhten Reichweite vorteilhaft.

Abhängig davon, wie weit die Fahrstrecke bis zur nächsten Auflademöglichkeit oder vorgesehenen Aufladung der Energiespeicher ist, kann abgewogen werden, welche der beiden der in Figur 5 gezeigten Vorgehensweisen die vorteilhaftere ist. D.h. es kann eine Abwägung stattfinden zwischen Reichweite einerseits und Wirkungsgradverschlechterung und somit gesteigertem Energiebedarf andererseits.

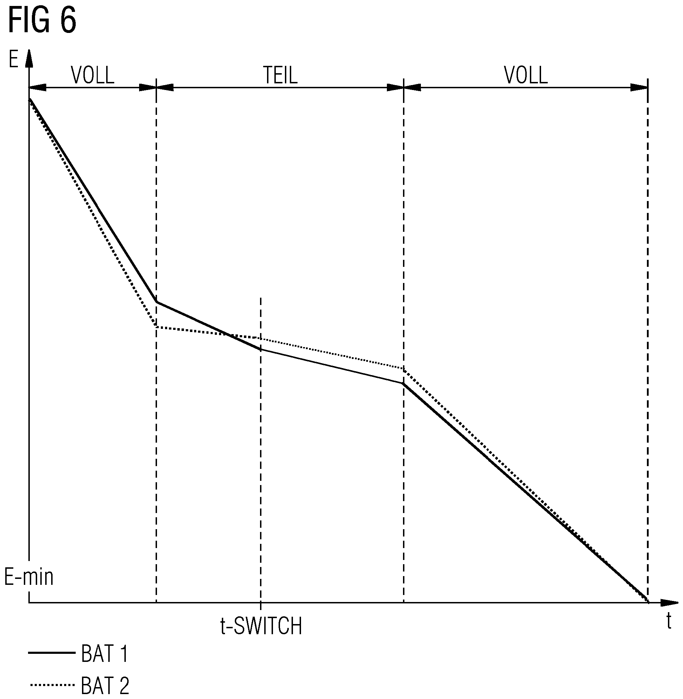

Wenn nicht die gesamte Dauer der Teillastphase nötig ist, um die Symmetrierung zu erreichen, kann im Fall, dass keine Wirkungsgradverbesserung durch Abschalten eines Antriebsteilsystems erreicht wird, auch nur ein Zeitanteil der Teillastphasen genutzt werden, der ausreicht, um die Symmetrierung zu erreichen. Dies ist in Figur 6 gezeigt. Zu Beginn der Teillastphase TEIL wird das Antriebsteilsystem mit dem stärker belasteten Energiespeicherteilsystem BAT 2 abgeschaltet. Zum Zeitpunkt t-SWITCH wird diese Teilabschaltung beendet und beide Energiespeicherteilsysteme tragen zur Fahrzeugtraktion bei. Durch diese Vorgehensweise wurde der Nachteil des schlechteren Wirkungsgrades bei Teilabschaltung nur so lange wie nötig in Kauf genommen, d.h. bis zu einem Ladezustand der beiden Energiespeicherteilsysteme BAT 1 und BAT 2, welcher ein gleichzeitiges Erreichen des minimalen Energieinhaltes E-min gewährleistet.

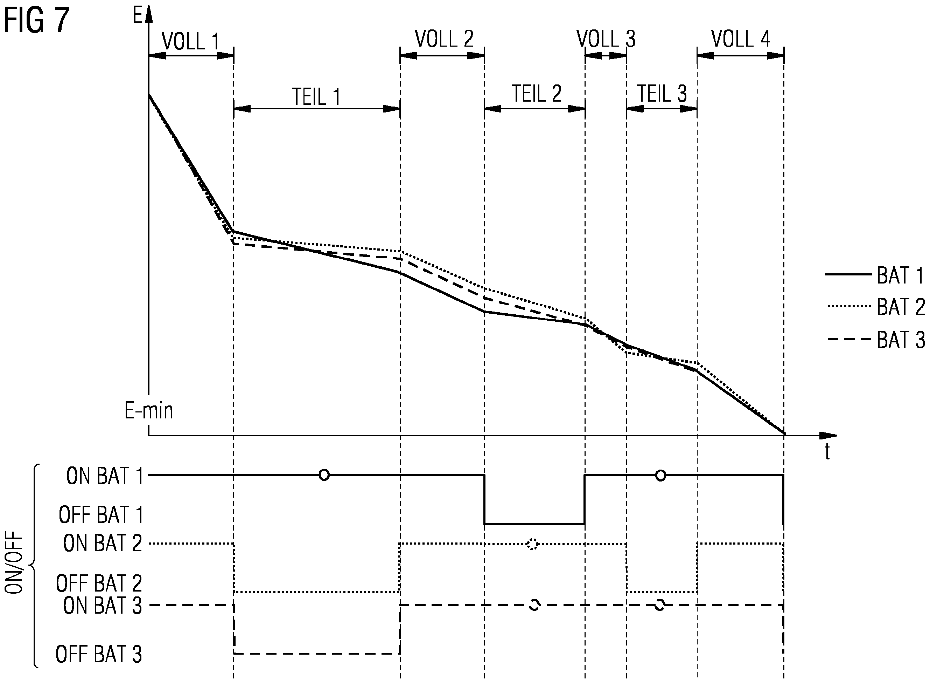

Sind mehr als zwei Antriebsteilsysteme vorhanden und ist die Teillast so gering, dass auch mehrere Antriebsteilsysteme abgeschaltet werden können, kann die Anzahl der aktiven Teilsysteme verschieden gewählt werden. Hierzu zeigt Figur 7 eine Grafik zur Veranschaulichung des Abschaltens eines oder mehrerer Antriebsteilsysteme im Teillastbetrieb. Hier werden in der ersten Teillastphase TEIL1 die beiden Antriebsteilsysteme der Energiespeicherteilsysteme BAT 2 und BAT 3 abgeschaltet, in der zweiten Teillastphase TEIL2 hingegen nur das Antriebsteilsystem des Energiespeicherteilsystems BAT 1, und in der dritten Teillastphase TEIL3 nur das Antriebsteilsystem des Energiespeicherteilsystems BAT 2.

Die in den Figuren 2 bis 7 gezeigten Fahrten, bei welchen sich wenige Volllast- und Teillastfahren abwechseln, entsprechen keinen realistischen Fahrtverläufen, sondern sind Prinzipdarstellungen und dienen dem einfacheren Verständnis der Erfindung. Insbesondere treten in der Praxis bei einem Fahrzeug auch Bremszyklen auf, die den Energieinhalt wieder anheben würden, was wegen der Komplexität nicht dargestellt ist. Außerdem würde in der Praxis der Betrieb deutlich vor dem Erreichen des minimalen Energieinhalts beendet sein, weil die Auslegung mit so viel Toleranz ausgestattet sein muss, dass die Endhaltestelle/Ladestation noch gut erreicht werden kann. D.h. in der Realität wäre die letzte Phase ein Bremsen, wobei dann noch Abstand zu der Minimallinie des Energieinhalts vorhanden wäre.

Die Ermittlung, wie viele und welche(s) der Antriebsteilsysteme im Teillastbetrieb für die Fahrzeugtraktion abzuschalten ist, geschieht durch ein Computerprogramm. Dies kann z.B. derart erfolgen, dass instantan, d.h. im Verlauf der Fahrt vor jeder Teillastphase die erforderliche Antriebsleistung festgestellt wird. Unter Verwendung eines Verlustmodells der Komponenten Motor und Energiespeicher kann hieraus die erforderliche Anzahl an aktiven Antriebsteilsystemen ermittelt werden. Ferner werden kontinuierlich die Energieinhalte der Energiespeicherteilsysteme gemessen. Dies erfolgt über an sich bekannte Vorgehensweisen, wie z.B. eine Integration der abgegebenen Leistung, oder indirekt über weitere Parameter. Entsprechend der Anzahl abzuschaltender Antriebsteilsysteme wird dann das bzw. werden dann die Antriebsteilsysteme mit dem geringsten Energieinhalt des jeweiligen Energiespeicherteilsystems abgeschaltet. Dieses Abschalten kann für eine vollständige Teillastphase erfolgen, oder es kann auch innerhalb einer Teillastphase umgeschaltet werden, wie in Figur 3 gezeigt.

Bei dieser einfachen Vorgehensweise werden also das oder die Antriebsteilsysteme aktiviert, dessen jeweiliges Energiespeicherteilsystem den höchsten Energiezustand (Energiereserve bis Energieminimalinhalt) aufweist. Bei relativer Veränderung der Energiezustände werden die Antriebsteilsysteme von Teillastphase zu Teillastphase oder auch innerhalb einer Teillastphase umgeschaltet. Insbesondere dann, wenn innerhalb der Teillastphasen umgeschaltet wird, führt dies dazu, dass die Symmetrierung gut gelingt. Hierbei ist es jedoch möglich, dass - anders als in den Figuren dargestellt - der Zeitpunkt, zu welchem der minimale Energieinhalt erreicht wird, nicht bei allen Energiespeicherteilsystemen in etwa der gleiche ist. Dies liegt daran, dass bei der einfachen Vorgehensweise nur die Teillastphasen betrachtet werden, so dass durch lange Volllastphasen eine starke Unsymmetrie hervorgerufen oder die Symmetrierung unmöglich gemacht werden kann.

In einer vorausschauenden Vorgehensweise, welche im Folgenden erläutert wird, werden hingegen die Antriebsteilsysteme, welche aktiv sein sollen, so gewählt, so dass der Symmetriereffekt am besten ist, d.h. die Energiespeicherteilsysteme gleichzeitig ihren minimalen Energieinhalt erreichen. Hierzu wird ein vorrauschauendes Lastprofil des Fahrzeugantriebs verwendet. Dieses Lastprofil kann auf an sich bekannte Weise berechnet werden, unter Verwendung von z.B. zu fahrenden Streckendaten, GPS-Daten der Strecke und Fahrplänen, oder auch mittels eines vorprogrammierten Fahrspiels. Somit ist der zeitabhängige Bedarf an Traktionsleistung für das gesamte Fahrzeug und die gesamte Fahrt bis zur nächsten Aufladung bekannt. Um zu ermitteln, welche Leistungsabgabe durch die Antriebsteilsysteme erforderlich ist, wird auch das oben bereits erläuterte Verlustmodell der Komponenten Motor und Energiespeicher einbezogen. Ferner kann auch ein Modell der Zusatzverbraucher-Lasten zum Einsatz kommen. Der Bedarf vieler Zusatzverbraucher ist gut vorhersagbar, z.B. Heizung, Kühlung aufgrund des Streckenprofils, der Umgebungstemperatur der Tages/Nachtzeit, durchschnittliche Anzahl der Passagiere. Somit ist schließlich für alle Antriebsteilsysteme bekannt, welche Leistung in den Volllastphasen erbracht werden muss. Ferner steht als Eingangsgröße der aktuelle Energieinhalt der Energiespeicher zur Verfügung, sowie der Alterszustand bzw. Gesundheitszustand der Energiespeicher. Aus diesem Zustand und dem vorausschauenden Verbrauch des jeweiligen Antriebsteilsystems kann abgeleitet werden, wie sich der Energieinhalt für das jeweilige Energiespeicherteilsystem entwickelt; dies entspricht der Steigung der Kurven in den Figuren 2 bis 7.

Unter Verwendung dieser Informationen kann abgeschätzt werden, wie viel Energie in den einzelnen Energiespeicherteilsystemen durch Teilabschaltung eingespart werden kann. Daraus können wiederum die Teillastphasen-Zeitanteile der jeweiligen Energiespeicherteilsysteme ermittelt werden, die notwendig sind, um die Energiezustände der relevanten Batterieteilsysteme im Hinblick auf das Ende der Entladung symmetrieren zu können.

Es wird also eine Verteilung von aktiven und abgeschalteten Antriebsteilsysteme bestimmt, welche die Symmetrierung der Energiespeicherteilsystem bewirkt. Außer diesem Ziel der Symmetrierung kann auch die bestmögliche Energieausnutzung, d.h. der Wirkungsgrad des Gesamtsystems bei der Entscheidung über eine Abschaltung zusätzlich berücksichtigt werden, wie anhand der Figuren 5 und 6 erläutert.

Die erläuterten Berechnungen können vor Beginn der Fahrt stattfinden, und die hierdurch bestimmten Teilabschaltungen dann während der Fahrt umgesetzt werden. Vorteilhaft ist es, wenn der Algorithmus überdies kontinuierlich mitläuft. Hierzu können aktuelle Daten hinsichtlich Energieinhalt der verschiedenen Energiespeicherteilsysteme, sowie Leistungsbedarf für Antrieb und Hilfsbetriebe verwendet werden, um die Sinnhaftigkeit der im Voraus bestimmten Teilabschaltungen zu verifizieren und gegebenenfalls anzupassen.

Entstehen die Unsymmetrien der Energiespeicherteilsysteme nicht durch unterschiedliche Alterung und damit Kapazitätsunterschiede, sondern nur durch unterschiedlichen Verbrauch, wird bei vorab erfolgter Symmetrierung nach oben beschriebenem Verfahren auch eine symmetrische Aufladung erreicht und damit ein gleichzeitiges Ladeende der verschiedenen Energiespeicherteilsysteme. Haben die Energiespeicher durch unterschiedliche Alterung unterschiedliche Kapazitäten, ergeben sich bei gleicher Ladleistung konsequenterweise unterschiedliche Ladezeiten.

Mit den erläuterten Verfahren der gezielten Teilabschaltung zum Zwecke der Symmetrierung der Energiespeicherteilsysteme erreicht man, dass das komplette Energiespeichersystem so optimal genutzt werden kann, dass alle einzelnen Energiespeicherteilsysteme ihre minimalen Energieinhalte nahezu gleichzeitig erreichen. Diese Symmetrierung realisiert damit die maximale Energieausnutzung des Gesamtspeichers. Hierdurch kann aufgrund der gesteigerten Reichweite eine unnötige Überdimensionierung der teuren Energiespeicher vermieden werden.

Bislang wurde nur der Antrieb des Fahrzeugs betrachtet, d.h. die Entladung der Energiespeicherteilsysteme während der Fahrt. Entsprechende Teillast und Volllast Abschnitte existieren auch beim Bremsen des Fahrzeugs; hierbei wird das beteiligte Energiespeicherteilsystem aufgeladen, d.h. Energie rekuperiert. Meist finden Bremsvorgänge mit hoher Leistung statt, d.h. es handelt sich um Volllast Vorgänge. Es gibt aber gelegentlich auch Teillastbremsvorgänge. Das für den Teillast Antrieb beschriebene Vorgehen kann entsprechend auch beim Teillast Bremsen angewendet werden. Die Symmetrierung kann in diesem Fall durch Teilabschaltung(en) in Teillastphasen des Antriebs und Teilabschaltung(en) in Teillastphasen des Bremsens erfolgen, oder auch nur durch Teilabschaltung(en) in Teillastphasen des Bremsens.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

## Patentansprüche

1. Verfahren zum Betreiben eines Antriebssystems, bei dem das Antriebssystem mindestens zwei Antriebsteilsysteme (ANTRIEB 1, ANTRIEB 2, ANTRIEB 3, ANTRIEB 4) umfasst, und jedes Antriebsteilsystem (ANTRIEB 1, ANTRIEB 2, ANTRIEB 3, ANTRIEB 4) über ein Energiespeicherteilsystem (BAT 1, BAT 2, BAT 3, BAT 4) verfügt,
bei hoher Leistungsabgabe (VOLL) des Antriebssystems jedes der mindestens zwei Antriebsteilsysteme (ANTRIEB 1, ANTRIEB 2, ANTRIEB 3, ANTRIEB 4) am Antrieb beteiligt ist,
derart in mindestens einem Zeitabschnitt geringerer Leistungsabgabe (TEIL) des Antriebssystems mindestens eines der mindestens zwei Antriebsteilsysteme (ANTRIEB 1, ANTRIEB 2, ANTRIEB 3, ANTRIEB 4) zumindest zeitweise abgeschaltet wird, so dass die Energiespeicherteilsysteme (BAT 1, BAT 2, BAT 3, BAT 4) der mindestens zwei Antriebsteilsysteme (ANTRIEB 1, ANTRIEB 2, ANTRIEB 3, ANTRIEB 4) einen minimalen Energieinhalt (E-min) gleichzeitig erreichen.

2. Verfahren nach Anspruch 1, bei dem
in einem Zeitabschnitt geringerer Leistungsabgabe (TEIL)
- ein Antriebsteilsystem (ANTRIEB 1, ANTRIEB 2, ANTRIEB 3, ANTRIEB 4) während dem gesamten Zeitabschnitt (TEIL) abgeschaltet wird,
oder
- ein Antriebsteilsystem (ANTRIEB 1, ANTRIEB 2, ANTRIEB 3, ANTRIEB 4) während nur eines Teils des Zeitabschnitts (TEIL) abgeschaltet wird
oder
- innerhalb des Zeitabschnitts (TEIL) ein Wechsel des abgeschalteten Antriebsteilsystems (ANTRIEB 1, ANTRIEB 2, ANTRIEB 3, ANTRIEB 4) erfolgt.

3. Verfahren nach Anspruch 1 oder 2, bei dem zu Beginn eines Zeitabschnitts geringerer Leistungsabgabe (TEIL)
- das Antriebsteilsystem (ANTRIEB 1, ANTRIEB 2, ANTRIEB 3, ANTRIEB 4), dessen Energiespeicherteilsystem (BAT 1, BAT 2, BAT 3, BAT 4) den kleinsten Energieinhalt (E) aufweist, abgeschaltet wird,
oder
- das Antriebsteilsystem (ANTRIEB 1, ANTRIEB 2, ANTRIEB 3, ANTRIEB 4), dessen Energiespeicherteilsystem (BAT 1, BAT 2, BAT 3, BAT 4) den größten Energieinhalt (E) aufweist, nicht abgeschaltet wird.

4. Verfahren nach einem der Ansprüche 1 bis 3, bei dem im Voraus unter Verwendung von Informationen über einen erforderlichen Leistungsbedarf und über einen aktuellen Energieinhalt (E) der Energiespeicherteilsysteme (BAT 1, BAT 2, BAT 3, BAT 4) bestimmt wird, welches der mindestens zwei Antriebsteilsysteme (ANTRIEB 1, ANTRIEB 2, ANTRIEB 3, ANTRIEB 4) abzuschalten ist.

5. Verfahren nach Anspruch 4, bei dem
es sich bei den Informationen über einen erforderlichen Leistungsbedarf um Streckeninformationen handelt betreffend eine von einem mit dem Antriebssystem ausgestatteten Fahrzeug zu fahrende Strecke.

6. Verfahren nach Anspruch 4 oder 5, bei dem bei Vorhandensein von mehr als zwei Antriebsteilsystemen (ANTRIEB 1, ANTRIEB 2, ANTRIEB 3, ANTRIEB 4) eine Bestimmung einer Anzahl von gleichzeitig abzuschaltenden Antriebsteilsystemen (ANTRIEB 1, ANTRIEB 2, ANTRIEB 3, ANTRIEB 4) erfolgt.

7. Verfahren nach einem der Ansprüche 4 bis 6,
wobei bei der Bestimmung berücksichtigt wird, dass hieraus eine Verbesserung des Gesamtwirkungsgrades des Antriebssystems resultieren soll.

8. Verfahren nach einem der Ansprüche 1 bis 7, bei dem bei hoher Leistungsabgabe (VOLL) des Antriebssystems jedes der mindestens zwei Antriebsteilsysteme (ANTRIEB 1, ANTRIEB 2, ANTRIEB 3, ANTRIEB 4) mit gleicher Leistungsabgabe am Antrieb beteiligt ist, und
die Energiespeicherteilsysteme (BAT 1, BAT 2, BAT 3, BAT 4) der mindestens zwei Antriebsteilsysteme (ANTRIEB 1, ANTRIEB 2, ANTRIEB 3, ANTRIEB 4) eine voneinander unterschiedliche Leistung an weitere Verbraucher abgeben.

9. Verfahren nach einem der Ansprüche 1 bis 8, bei dem eine Abschaltung unter der Bedingung erfolgt, dass hieraus eine Verbesserung des Gesamtwirkungsgrades des Antriebssystems resultiert,
oder
eine Abschaltung auch dann erfolgt, wenn hieraus eine Verschlechterung des Gesamtwirkungsgrades des Antriebssystems resultiert.

10. Verfahren nach einem der Ansprüche 1 bis 9, bei dem derart in mindestens einem Zeitabschnitt geringerer Leistungsaufnahme des Antriebssystems mindestens eines der mindestens zwei Antriebsteilsysteme (ANTRIEB 1, ANTRIEB 2, ANTRIEB 3, ANTRIEB 4) zumindest zeitweise abgeschaltet wird, so dass die Energiespeicherteilsysteme (BAT 1, BAT 2, BAT 3, BAT 4) der mindestens zwei Antriebsteilsysteme (ANTRIEB 1, ANTRIEB 2, ANTRIEB 3, ANTRIEB 4) einen minimalen Energieinhalt (E-min) gleichzeitig erreichen.

11. Antriebssystem für ein Schienenfahrzeug,
wobei das Antriebssystem mindestens zwei Antriebsteilsysteme (ANTRIEB 1, ANTRIEB 2, ANTRIEB 3, ANTRIEB 4) umfasst, und jedes Antriebsteilsystem (ANTRIEB 1, ANTRIEB 2, ANTRIEB 3, ANTRIEB 4) über ein Energiespeicherteilsystem (BAT 1, BAT 2, BAT 3, BAT 4) verfügt,
mit Steuermitteln zum An- und Abschalten der Antriebsteilsysteme (ANTRIEB 1, ANTRIEB 2, ANTRIEB 3, ANTRIEB 4) so,
dass bei hoher Leistungsabgabe (VOLL) des Antriebssystems jedes der mindestens zwei Antriebsteilsysteme (ANTRIEB 1, ANTRIEB 2, ANTRIEB 3, ANTRIEB 4) am Antrieb beteiligt ist,
und derart in mindestens einem Zeitabschnitt geringerer Leistungsabgabe (TEIL) des Antriebssystems mindestens eines der mindestens zwei Antriebsteilsysteme (ANTRIEB 1, ANTRIEB 2, ANTRIEB 3, ANTRIEB 4) zumindest zeitweise abgeschaltet wird, so dass die Energiespeicherteilsysteme (BAT 1, BAT 2, BAT 3, BAT 4) der mindestens zwei Antriebsteilsysteme (ANTRIEB 1, ANTRIEB 2, ANTRIEB 3, ANTRIEB 4) einen minimalen Energieinhalt (E-min) gleichzeitig erreichen.

12. Vorrichtung oder System zur Datenverarbeitung, umfassend Mittel zur Ausführung des Verfahrens nach einem der Ansprüche 1 bis 10.

13. Computerprogramm, umfassend Befehle, die bei der Ausführung des Programms durch einen Computer diesen veranlassen, die Schritte des Verfahrens nach einem der Ansprüche 1 bis 10 auszuführen.

14. Computerlesbarer Datenträger, auf dem das Computerprogramm nach Anspruch 13 gespeichert ist.

15. Datenträgersignal, das das Computerprogramm nach Anspruch 13 überträgt.
